# EUROPÄISCHE PATENTSCHRIFT

(11) **EP 0 833 791 B1**
(45) Veröffentlichungstag und Bekanntmachung des Hinweises auf die Patenterteilung: **21.04.1999**
(21) Anmeldenummer: 96919522.1
(22) Anmeldetag: 12.06.1996
(51) Int. Cl.: B65G 43/10, B65G 17/26

(54) **ZUFÜHREINRICHTUNG ZU EINER VERPACKUNGSMASCHINE**
FEED DEVICE FOR A PACKAGING MACHINE
DISPOSITIF D'ALIMENTATION D'UNE MACHINE D'EMBALLAGE

(30) Priorität: 13.06.1995 CH 1741/95
(43) Veröffentlichungstag der Anmeldung: 08.04.1998
(73) Patentinhaber: SIG Pack Systems AG, 8222 Beringen (CH)
(72) Erfinder: FLUCK, René, CH-8226 Schleitheim (CH); LOOSER, Walter, CH-8468 Waltalingen (CH)
(74) Vertreter: Münch, Otto, Dipl.-Ing.
(86) Internationale Anmeldenummer: CH9600225
(87) Internationale Veröffentlichungsnummer: WO9641760

(56) Entgegenhaltungen:
- FR-A- 1 393 472
- FR-A- 2 391 126

## Beschreibung

Aus der CH-A-412 708 (GB-PS-1.060.219) oder der US-PS-4,068,756 sind Zuführeinrichtungen zu einer Verpackungsmaschine bekannt. Von einer endlosen, umlaufenden Kette werden Mitnehmer mitgenommen, welche in einer regelmässigen Teilung angeordnet sind. Bei der Lösung nach der US-PS-4,068,756 stehen von der Kette bei jedem Gelenk seitlich Zapfen ab, auf welche die Mitnehmer aufgesteckt sind. Durch Umstecken kann die Teilung verändert werden. Die Länge der Umlaufbahn der Mitnehmer muss dabei ein ganzzahliges vielfaches der Teilung sein. Um dies zu erreichen, ist am unteren Trum der Kette eine Schlaufe gebildet, über welche die Mitnehmer über einen Bypass geführt sind. Das stromaufwärtige Umlenkrad der Kette ist in Förderrichtung verstellbar.

Der vorliegenden Erfindung liegt die Aufgabe zugrunde, eine Fördereinrichtung der eingangs genannten Art derart auszubilden, dass sie gegenüber den oben beschriebenen Lösungen einfacher ist. Diese Aufgabe wird durch die Merkmalskombination der Ansprüche gelöst.

Nachfolgend wird ein Ausführungsbeispiel der Erfindung anhand der Zeichnungen erläutert. Darin zeigt:
- Figur 1: eine schematische perspektivische Ansicht der Einrichtung,
- Figur 2: eine schematische Seitenansicht,
- Figur 3: einen Querschnitt,
- Figur 4: eine detailliertere Seitenansicht eines Teils der Einrichtung, und
- Figuren 5 und 6: Draufsichten auf einen Ausschnitt.

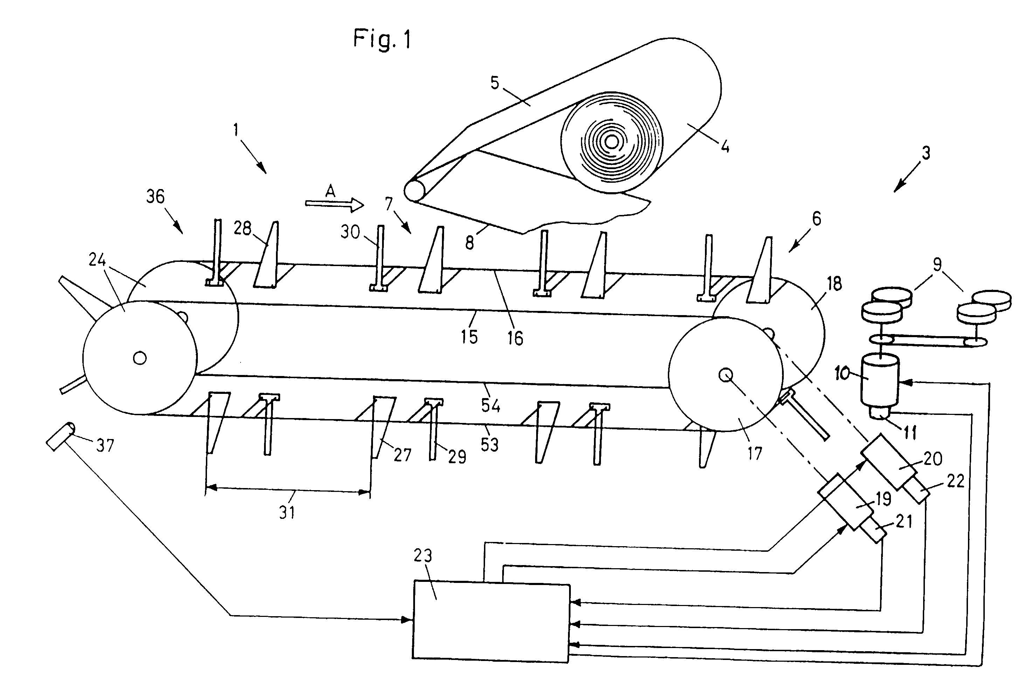

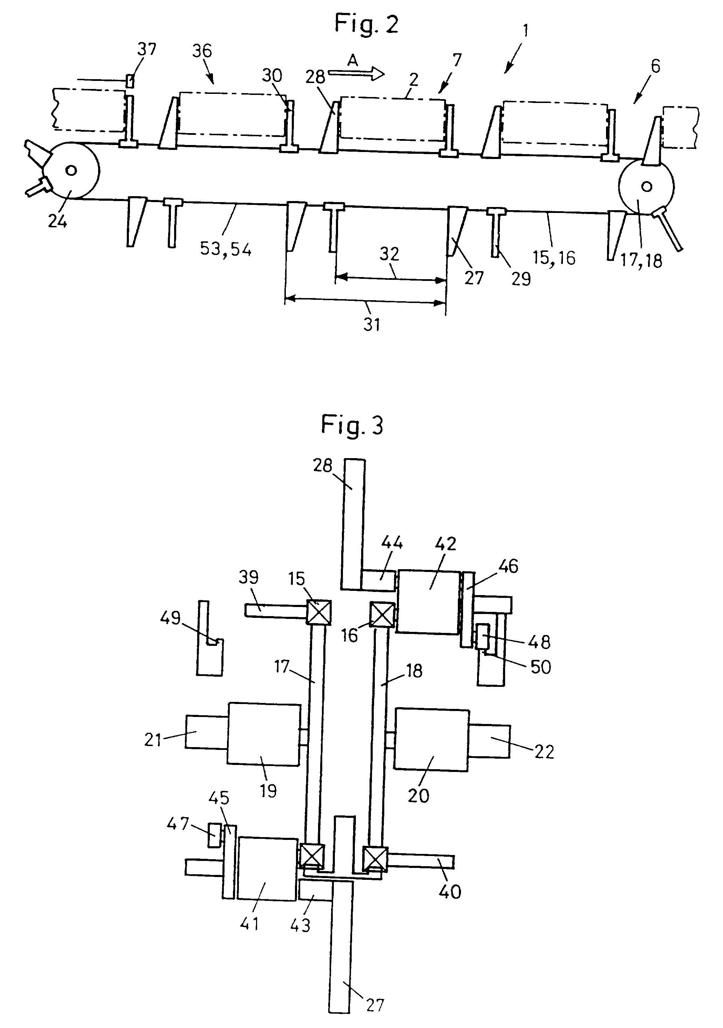

Die in Figur 1 schematisch dargestellte Fördereinrichtung 1 dient zur Zufuhr von Produkten 2 (Figur 2), z.B. von Gruppen hochkant gestellter Biscuits, zu einer bloss angedeuteten Verpackungsmaschine 3. Die Verpackungsmaschine kann eine Schlauchbeutel-Verpackungsmaschine z.B. gemäss EP-B-399 848 sein. Die Verpackungsmaschine 3 hat eine Vorratsrolle 4 von Einschlagmaterialfolie 5. Am stromabwärtigen Ende, der Ausgangsstation 6 der Arbeitsstrecke 7 der Einrichtung 1 werden die Produkte 2 von der Folie 5 umhüllt. In Förderrichtung A stromabwärts der Ausgangsstation 6 werden die Längsränder 8 der Folie 5 durch Siegel- und Transporträder 9 miteinander versiegelt, so dass ein Schlauch um die voneinander beabstandeten Produkte 2 gebildet wird. Die Räder 9 werden durch einen Motor 10 angetrieben. Der Motor 10 ist mit einem Drehwinkelgeber 11 verbunden.Stromabwärts der Räder 9 erfolgt durch nicht dargestellte Quersiegelbacken mit Trennmessern die Endversiegelung und Abtrennung in einzelne Packungen.

Die Einrichtung 1 umfasst zwei zueinander parallele Förderketten 15, 16. Die Ketten 15, 16 sind an der Ausgangsstation 6 um zwei koaxiale, gleich grosse Kettenräder 17, 18 geführt. Die Räder 17, 18 sind durch separate Servomotoren 19, 20 angetrieben, welche je einen Drehwinkel-Inkrementalgeber 21, 22 aufweisen. Die Geber 21, 22 sind mit einer Steuereinrichtung 23 verbunden, welche die Motoren 19, 20 bezüglich Drehzahl und Drehwinkel sowie den Motor 10 und den nachgeschalteten, nicht dargestellten Motor für die Quersiegelbacken steuert. Am stromaufwärtigen Ende der Arbeitsstrecke 7 laufen die Ketten 15, 16 über koaxiale Umlenkräder 24.

An jeder Kette 15, 16 sind auf einem Teil ihres Umfangs, vorzugsweise etwa auf der Hälfte des Umfangs, Mitnehmer 27, 28 und Gegenhalter 29, 30 befestigt. Pro Kette 15, 16 haben die Mitnehmer 27, 28 im Abschnitt, in welchem die Ketten 15, 16 bestückt sind, einen regelmässigen Abstand voneinander entsprechend der Teilung 31. Ebenso ist der Abstand 32 zwischen Mitnehmer 27, 28 und zugehörigem Gegenhalter 29, 30 konstant. Benachbart aber vor der Eingangsstation 36 befindet sich ein Fühler 37 zum Erfassen des Durchgangs jedes Mitnehmers 27, 28 und/oder jedes Gegenhalters 29, 30, welche alle in derselben Vertikalebene umlaufen. Der Fühler 37 ist ebenfalls mit der Steuereinrichtung 23 verbunden. In der Eingangsstation 36 werden die Produkte 2 z.B. durch einen Stössel quer zur Transportrichtung A auf die Fördereinrichtung 1 aufgeschoben.

Wie aus den Figuren 3 bis 6 hervorgeht, steht von jedem Gelenk der Ketten 15, 16 ein Zapfen 39, 40 nach aussen, d.h. gegen die von der anderen Kette 16, 15 abgewandte Seite horizontal ab. Auf jeweils zwei benachbarten dieser Zapfen 39, 40 sind Mitnehmerkörper 41, 42 sowie die Gegenhalter 29, 30 mit entsprechenden Bohrungen aufgesteckt. Die Mitnehmer 27, 28 sind auf diesen Körpern 41, 42 um Querachsen 43, 44 schwenkbar gelagert. Auf der Aussenseite der Körper 41, 42 ist mit den Achsen 43, 44 ein Hebel 45, 46 starr verbunden, welcher am freien Ende eine Führungsrolle 47, 48 trägt. Die Hebel 45, 46 sind durch eine nicht dargestellte Feder so belastet, dass die Rollen 47, 48 auf Führungsbahnen 49, 50 aufliegen, zumindest längs der Arbeitsstrecke 7. Am Ende der Arbeitsstecke 7 haben die Führungsbahnen 49, 50 eine nicht dargestellte Ansenkung, damit die Mitnehmer 27, 28 in der in der US-A-4,068,756 und der EP-B-399 948 erläuterten Art nach rückwärts schwenken, um das Produkt 2 bei der Ausgangsstation 6 nicht in Förderrichtung A zu beschleunigen.

Durch Umstecken der Mitnehmerkörper 41, 42 und/oder der Gegenhalter 29, 30 können die Teilung 31 und/oder der Abstand 32 verändert und der Länge der Produkte 2 oder der gewünschten Quersiegelbreite und Produktedicke angepasst werden. Im allgemeinen wird dabei das Produkt aus Teilung 31 und Anzahl der Mitnehmer 27, 28 nicht dem Umfang der Ketten 15, 16 entsprechen. Ausserhalb des Arbeitsbereichs 7, d.h. im unteren Trum 53, 54 der Ketten 15, 16 wird deshalb der vorderste Mitnehmer 27, 28 der einen Kette 15, 16 vom hintersten Mitnehmer 28, 27 der anderen Kette 16, 15 einen Abstand haben, der nicht der Teilung 31 entspricht. Dies wird jeweils ausgeglichen bevor der vorderste Mitnehmer 27, 28 bzw. Gegenhalter 29, 30 die Eingangsstation 36 erreicht, in dem der betreffende Motor 21 bzw. 22 entsprechend beschleunigt und verzögert oder verzögert und beschleunigt wird, gesteuert durch die Steuereinrichtung 23 anhand der Signale des Fühlers 37 sowie der Drehwinkelgeber 21, 22 derart, dass längs der Arbeitsstrecke 7 sämtliche Mitnehmer 27, 28 immer einen konstanten Abstand voneinander entsprechend der Teilung 31 haben.

Die erfindungsgemässe Einrichtung ist sehr viel einfacher aufgebaut als die eingangs genannten Einrichtungen, weil sie keiner zusätzlichen Schleife der Transportketten 15, 16 und keiner Einstellung der Lage der stromaufwärtigen Umlenkräder 24 bedarf. Sie ist sehr flexibel und leicht an andere Produktabstände und Produktlängen anpassbar. Durch den einfachen Aufbau ist sie auch betriebssicherer.

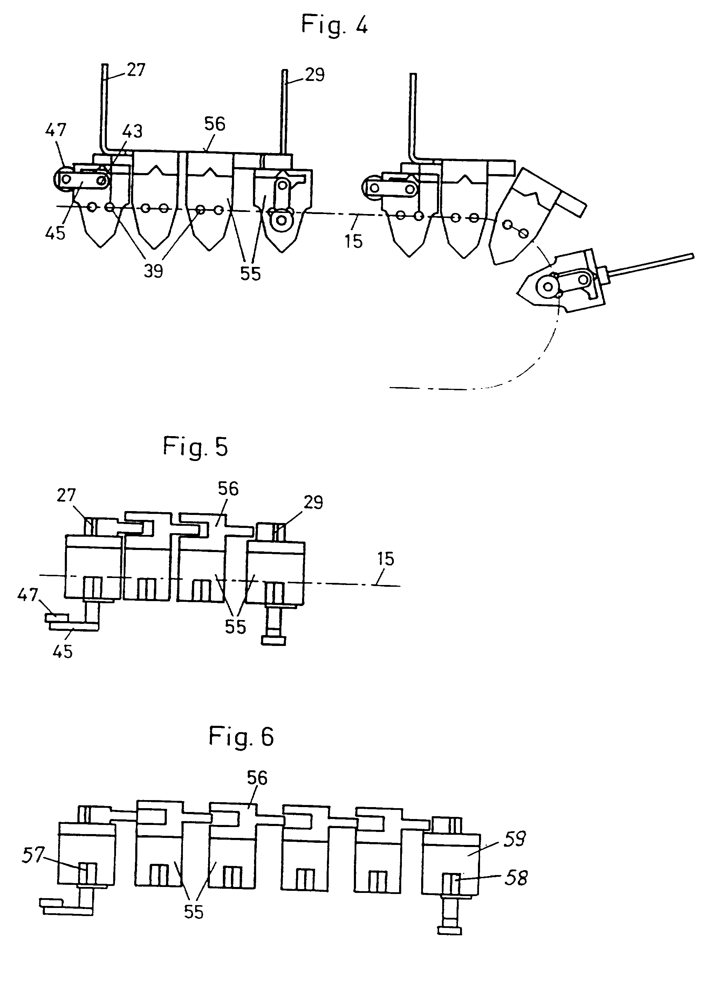

In den eingangs genannten Einrichtungen werden die Produkte 2 über die Arbeitsstrecke 7 auf einer geschlitzten Platte geschoben. Die Mitnehmer 27, 28 und Gegenhalter 29, 30 greifen durch den Schlitz dieser Platte. Bei der erfindungsgemässen Einrichtung dagegen werden auf die Ketten 15, 16 zwischen den Mitnehmern 27, 28 und den zugehörigen Gegenhaltern 29, 30 zusätzlich Tragelemente 55 mit Tragflächen 56 auf je zwei Zapfen 39, 40 aufgesteckt. Die Tragelemente 55 greifen im Bereich der Tragflächen 56 fingerartig ineinander (Figuren 5 und 6), so dass auch Abstände 32 überbrückt werden können, welche kein ganzzahliges vielfaches der Tragelementlänge sind. Durch diese Tragelemente wird eine sehr schonende Handhabung der Produkte 2 erreicht.

Statt der Ketten 15, 16 eignen sich als Förderelemente z.B. auch Zahnriemen.

Abweichend vom dargestellten Ausführungsbeispiel können auch zwei separate Fühler 37 für die beiden Ketten 15, 16 angeordnet werden, wobei der eine Fühler 37 nur die Mitnehmer 27 und/oder Gegenhalter 29 der einen Kette 15 und der andere Fühler 37 nur jene der andern Kette 16 erfasst. Dazu können die Fühler 37 zum Beispiel Vorsprünge 57, 58 auf den Tragelementen 55 bzw. den Trägern 59 der Gegenhalter 29 beim Durchgang erfassen, z.B. induktiv oder lichtoptisch. Zur Synchronisation der Motoren 21, 22 mit dem Motor 10 kann letzterer zusätzlich einen Drehwinkel-Inkrementalgeber 11 aufweisen, der mit der Steuereinrichtung 23 verbunden ist.

Wie aus Figuren 1 und 2 hervorgeht, kann das vorderste Element der Gruppe von Mitnehmern 27, 28 und Gegenhaltern 29, 30 einer Kette 15, 16 entweder ein Mitnehmer 27, 28 oder ein Gegenhalter 29, 30 sein. Dadurch kann die auszugleichende Teilungsabweichung gering gehalten werden. Die maximal auszugleichende Teilungsabweichung entspricht dann weniger als der Hälfte der Teilung. Um einen schonenden Betrieb zu erreichen, werden die beim Teilungsausgleich erforderlichen Beschleunigungen und Verzögerungen minimiert.

## Patentansprüche

1. Zuführeinrichtung zu einer Verpackungsmaschine (3), umfassend zwei zumindest längs einer Arbeitsstrecke (7) zwischen einer Eingangsstation (36) und einer Ausgangsstation (6) nebeneinander angeordnete, endlose, umlaufende Förderelemente (15,16), welche je durch einen separaten Antrieb (19,20) antreibbar sind, wobei von jedem Förderelement (15,16) über lediglich einen Teil seiner Länge Mitnehmer (27,28) mit regelmässiger, einstellbarer Teilung (31) abstehen, und wobei eine Steuereinrichtung (23) vorhanden ist, um die Antriebe (19,20) derart zu steuern, dass im Bereich der Eingangsstation (36) der vorderste Mitnehmer (27,28) des einen Förderelementes (15,16) dem hintersten Mitnehmer (28,27) des anderen Förderelementes (16,15) im Abstand der Teilung (31) folgt.

2. Einrichtung nach Anspruch 1, wobei die Mitnehmer (27,28) beider Förderelemente (15,16) annähernd in derselben Ebene angeordnet sind.

3. Einrichtung nach Anspruch 1 oder 2, wobei die Förderelemente Ketten (15,16) sind und die Mitnehmer (27,28) an Mitnehmerkörpern (41,42) befestigt sind, die auf quer von der Kette (15,16) abstehenden Zapfen (39,40) aufgesteckt sind.

4. Einrichtung nach Anspruch 3, wobei die Mitnehmer (27,28) um Querachsen (39,40) auf dem Mitnehmerkörper (41,42) schwenkbar gelagert sind.

5. Einrichtung nach einem der Ansprüche 1 bis 4, wobei jedes Förderelement (15,16) mindestens drei Mitnehmer (27,28) aufweist.

6. Einrichtung nach einem der Ansprüche 1 bis 5, wobei die Drehzahl des einen Antriebs (19,20) gleichförmig ist, solange sich mindestens einer der Mitnehmer (27,28) des mit diesem Antrieb (21,22) angetriebenen Förderelementes (15,16) im Bereich der Arbeitsstrecke (7) befindet, und dass dieser Antrieb (19,20) ungleichförmig antreibt, wenn sich der vorderste dieser Mitnehmer (27,28) dem Bereich der Eingangsstation (36) nähert.

7. Einrichtung nach einem der Ansprüche 1 bis 6, wobei die Förderelemente (15,16) auf mindestens einer Seite um je ein Umlenkrad (17,18) umgelenkt sind und die beiden Umlenkräder (17,18) koaxial und mit den Antrieben (19,20) verbunden sind.

8. Einrichtung nach einem der Ansprüche 1 bis 7, wobei die Antriebe (19,20) Wechselstrom-Synchron-Motoren (AC-Servomotoren) sind.

9. Einrichtung nach einem der Ansprüche 1 bis 8, wobei die Antriebe (19,20) Inkrementalgeber (21,22) aufweisen und im Bereich der Umlaufbahn der Mitnehmer (27,28), vorzugsweise benachbart aber vor der Eingangsstation (36), ein Positionsfühler (37) für die Mitnehmer (27,28) angeordnet ist, wobei der Positionsfühler (37) und die Inkrementalgeber (21,22) mit der Steuereinrichtung (22) verbunden sind, welche die Antriebe (19,20) steuert.

10. Einrichtung nach einem der Ansprüche 1 bis 9, wobei die Förderelemente (15,16) zusätzlich Tragelemente (55) mit einer Tragfläche (56) zur Abstützung der zu fördernden Produkte (2) aufsteckbar sind.

## Claims

1. Feed device for a packing machine (3), including two endless conveying elements (15, 16) that circulate adjacent to one another at least along an operating path (7) between an initial station (36) and an end station (6), the conveying elements being driven by separate drives (19, 20), wherein pushers (27, 28) are spaced with a uniform, settable interval (31) over only a portion of the length of each conveying element (15, 16), and wherein a control device (23) is provided for controlling the drives (19, 20) such that the front pusher (27, 28) of the one conveying element (15, 16) follows the back pusher (28, 27) of the other conveying element (16, 15) with the spacing of the interval (31) in the region of the initial station (36).

2. Device according to claim 1, wherein the pushers (27, 28) of the two conveying elements (15, 16) are disposed in virtually the same plane.

3. Device according to claim 1 or 2, wherein the conveying elements are chains (15, 16), and the pushers (27, 28) are secured to pusher bodies (41, 42) inserted onto pins (39, 40) that project transversely from the chains (15, 16).

4. Device according to claim 3, wherein the pushers (27, 28) are seated on the pusher body (41, 42) so as to pivot about transverse shafts (39, 40).

5. Device according to one of claims 1 through 4, wherein each conveying element (15, 16) has at least three pushers (27, 28).

6. Device according to one of claims 1 through 5, wherein the rpm of the one drive (19, 20) is uniform, provided that at least one of the pushers (27, 28) of the conveying element (15, 16) that is driven with this drive (21, 22) is disposed in the region of the operating path (7), and that this drive (19, 20) drives non-uniformly when the front pusher (27, 28) approaches to region of the initial station (36).

7. Device according to one of claims 1 through 6, wherein the conveying elements (15, 16) are respectively diverted on at least one side around a deflecting wheel (17, 18), and the two deflecting wheels (17, 18) are coaxial and are connected to the drives (19, 20).

8. Device according to one of claims 1 through 7, wherein the drives (19, 20) are AC-synchronous motors (AC servo motors).

9. Device according to one of claims 1 through 8, wherein the drives (19, 20) have incremental resolvers (21, 22), and a position sensor (37) for the pushers (27, 28) is preferably disposed near, but in front of, the initial station (36), in the region of the circulating path of the pushers (27, 28), with the position detector (37) and the incremental resolver (21, 22) being connected to the control device (23), which controls the drives (19, 20).

10. Device according to one of claims 1 through 9, wherein the conveying elements (15, 16) can additionally have inserted support elements (55) having a support surface (56) for supporting the products (2) to be conveyed.

## Revendications

1. Dispositif d'alimentation d'une machine d'emballage (3) comprenant au moins deux éléments de transport (15, 16) à mouvement de circulation, continu, disposés l'un à côté de l'autre le long d'un chemin de travail (7) entre un poste d'entrée (36) et un poste de sortie (6), éléments de transport susceptible d'être entraînés chacun par un entraînement (19, 20) séparé, des organes d'entraînement (27, 28) faisant saillie depuis chaque élément de transport (15, 16), selon un pas de division (31) réglable, régulier, sur seulement une partie de sa longueur, et un dispositif de commande (23) étant prévu pour commander les entraînements (19, 20), de manière que, dans la zone du poste d'entrée (36), l'organe d'entraînement (27, 28) se trouvant le plus à l'avant et appartenant à un élément de transport (15, 16) suive l'organe d'entraînement (28, 27) le plus à l'arrière et appartenant à l'autre élément de transport (15, 16), l'espacement correspondant à la valeur d'un pas de division (31).

2. Dispositif selon la revendication 1, les organes d'entraînement (27, 28) des deux éléments de transport (15, 16) étant disposés à peu près dans le même plan.

3. Dispositif selon la revendication 1 ou 2, les éléments de transport étant des chaînes (15, 16) et les organes d'entraînement (27, 28) étant fixés à des corps d'entraînement (41, 42) qui sont enfilés sur des tenons (39, 40) faisant saillie transversalement par rapport à la chaîne (15, 16).

4. Dispositif selon la revendication 3, les organes d'entraînement (27, 28) étant montés de façon à pouvoir pivoter autour d'axes transversaux (39, 40), sur le corps d'entraînement (41, 42).

5. Dispositif selon l'une des revendications 1 à 4, chaque élément de transport (15, 16) présentant au moins trois organes d'entraînement (27, 28).

6. Dispositif selon l'une des revendications 1 à 5, la vitesse de rotation d'un entraînement (19, 20) étant régulière tant qu'au moins l'un des organes d'entraînement (27, 28) de l'élément de transport (15, 16) entraîné par cet entraînement (21, 22) se trouve dans la zone du chemin de travail (7), et en ce que cet entraînement (19, 20) assure un entraînement non régulier lorsque le plus à l'avant de ces organes d'entraînement (27, 28) s'approche de la zone du poste d'entrée (36).

7. Dispositif selon l'une des revendications 1 à 6, les éléments de transport (15, 16) étant déviés sur au moins un côté, chaque fois en passant autour d'une roue de renvoi (17, 18), et les deux roues de renvoi (17, 18) étant coaxiales et reliées aux entraînements (19, 20).

8. Dispositif selon l'une des revendications 1 à 7, les entraînements (19, 20) étant constitués par des moteurs synchrones à courant alternatif (servomoteurs AC).

9. Dispositif selon l'une des revendications 1 à 8, les entraînements (19, 20) présentant des transducteurs incrémentiels (21, 22) et, dans la zone de la trajectoire de circulation des organes d'entraînement (27, 28), de préférence au voisinage mais avant le poste d'entrée (36), un détecteur de position (37) destiné aux organes d'entraînement (27, 28) étant prévu, le détecteur de position (37) et les transducteurs incrémentiels (21, 22) étant reliés au dispositif de commande (22) assurant la commande des entraînements (19, 20).

10. Dispositif selon l'une des revendications 1 à 9, sur les éléments de transport (15, 16) étant en plus susceptibles d'être enfichés des éléments support (55) ayant une surface support (56) destinée à l'appui des produits (2) à transporter.
